(19) Europäisches Patentamt
European Patent Office
Office européen des brevets

(11) **EP 1 517 822 B1**

(12) **FASCICULE DE BREVET EUROPEEN**

(45) Date de publication et mention de la délivrance du brevet:
**23.02.2011 Bulletin 2011/08**

(21) Numéro de dépôt: 03735652.4

(22) Date de dépôt: **20.06.2003**

(51) Int Cl.:
*B60T 8/00* $^{(2006.01)}$      *B60T 8/172* $^{(2006.01)}$
*G01M 17/02* $^{(2006.01)}$

(86) Numéro de dépôt international:
**PCT/EP2003/006510**

(87) Numéro de publication internationale:
**WO 2004/000620 (31.12.2003 Gazette 2004/01)**

(54) **MESURE DU COEFFICIENT D'ADHERENCE MAXIMAL A PARTIR DE LA MESURE DE CONTRAINTES DANS UN BOURRELET D'UN PNEU**

MESSUNG DES MAXIMALEN HAFTUNGSKOEFFIZIENTS AUS DER BELASTUNGSMESSUNG AN EINER REIFENWULST

MEASUREMENT OF THE MAXIMUM ADHESION COEFFICIENT BY MEASURING STRESS IN A BEAD OF A TYRE

(84) Etats contractants désignés:
**AT BE BG CH CY CZ DE DK EE ES FI FR GB GR HU IE IT LI LU MC NL PT RO SE SI SK TR**

(30) Priorité: **24.06.2002 FR 0207809**

(43) Date de publication de la demande:
**30.03.2005 Bulletin 2005/13**

(73) Titulaires:
- **Société de Technologie Michelin**
  **63000 Clermont-Ferrand Cedex 09 (FR)**
- **Michelin Recherche et Technique S.A.**
  **1763 Granges-Paccot (CH)**

(72) Inventeur: **BERTRAND, David**
**F-63400 Chamalières (FR)**

(74) Mandataire: **Bauvir, Jacques**
**Michelin & Cie**
**Service SGD/LG/PI**
**C.E.R. Ladoux - F35**
**63040 Clermont-Ferrand Cedex 09 (FR)**

(56) Documents cités:
**EP-A- 1 095 794**      **WO-A-01/36241**
**DE-A- 4 435 448**      **US-A- 3 852 993**
**US-A- 4 715 662**      **US-A- 4 862 368**
**US-A- 5 864 056**      **US-A- 5 964 265**
**US-A1- 2002 157 746**      **US-B1- 6 266 600**
**US-B1- 6 338 270**

EP 1 517 822 B1

**Description**

La présente invention se rapporte à l'évaluation de l'adhérence d'un véhicule sur une chaussée. Elle concerne plus particulièrement la détermination de caractéristiques d'adhérence entre la chaussée et une roue de véhicule, équipée d'un bandage élastique tel qu'un pneu gonflé ou un bandage élastique non pneumatique qui roule sur la chaussée.

La présente invention concerne aussi les divers dispositifs d'assistance électronique utilisés par exemple pour la régulation antiblocage des freins d'un véhicule ou la régulation anti-patinage des roues motrices, le contrôle de trajectoire d'un véhicule ou encore pour d'autres formes de contrôle ou de surveillance comme la pression des pneus. On sait que de tels dispositifs reconstruisent par calcul le coefficient d'adhérence ($\mu$) des pneus sur la chaussée, sans avoir procédé à la moindre mesure ni du coefficient d'adhérence ni des efforts développés dans le contact des pneus au sol. Même si ces dispositifs apportent une assistance remarquable et un surcroît de sécurité, leur fonctionnement gagnerait beaucoup à utiliser une valeur mesurée, ou estimée à partir de mesures réelles effectuées sur le pneu en fonctionnement.

C'est pourquoi l'objectif de la présente invention est de proposer une évaluation de l'adhérence d'un véhicule sur une chaussée, plus précisément de ses roues ou pneus ou bandages élastiques, termes considérés comme équivalents dans le contexte de la présente invention. Elle concerne plus particulièrement la détermination de caractéristiques d'adhérence entre la chaussée et une roue de véhicule, équipée d'un bandage élastique tel qu'un pneu gonflé ou un bandage élastique non pneu qui roule sur la chaussée.

Les divers dispositifs d'assistance électronique évoqués ci-dessus profiteraient donc utilement d'indications « en temps réel » sur les conditions d'adhérence susceptibles d'affecter le comportement d'un véhicule, notamment dans le cas où il subit une accélération par effort moteur ou par effort freineur ou par changement de direction de déplacement. L'invention vise à fournir une méthode d'y parvenir de manière efficace. Dans ce qui suit, on entend par « potentiel d'adhérence maximum» le rapport entre l'effort tangentiel maximal (transversal ou longitudinal ou les deux combinés) et l'effort normal que la roue peut subir. Dans le texte, on le désigne aussi par le terme « coefficient d'adhérence maximal » ou la lettre $\mu$.

On entend par « efforts globaux » les trois composantes de forces Fx, Fy et Fz appliquées au centre de la roue et le couple d'auto-alignement N autour de l'axe Z.

Dans le but d'estimer le potentiel d'adhérence maximum, il a été proposé d'équiper la bande de roulement d'un pneu, ou certains éléments de la bande de roulement spécialement adaptés, de capteurs destinés à mesurer ou à estimer les efforts générés localement, en particulier en conditions de glissement. Ces approches, quoique fort prometteuses, présentent néanmoins certaines difficultés intrinsèques. Il est en effet difficile de garantir le bon fonctionnement d'un capteur dans cette zone du pneu, en particulier avec l'usure de la bande de roulement, pendant toute la vie du pneu. De plus, les estimations fournies par ces capteurs sont très locales et sensibles à l'état de surface de la chaussée.

Or comme on cherche en fait à estimer le potentiel d'adhérence maximum de la roue, il faut encore le déterminer à partir du potentiel local mesuré.

Les documents WO-A-01/36241 et US-A-5964265 divulguent une méthode de détermination du coefficient d'adhérence dans l'aire de contact d'un pneu sur une chaussée, dans laquelle on sélectionne plusieurs points dans le pneu, on effectue autant de mesures de variation de la position de ces points lorsque le pneu roule sur la chaussée et l'on traite les signaux de mesure de façon à en extraire ledit coefficient d'adhérence.

Le document US-A-5864056 divulgue une méthode de détermination du coefficient d'adhérence dans l'aire de contact d'un pneu sur une chaussée, dans laquelle on sélectionne plusieurs points dans la bande de roulement du pneu, on effectue autant de mesures de variation de contrainte à ces points lorsque le pneu roule sur la chaussée et l'on traite les signaux de mesure de façon à en extraire ledit coefficient d'adhérence.

L'invention détaillée ici se distingue de ces approches locales. Elle propose d'utiliser une mesure des contraintes générées par les déformations globales du pneu de manière à obtenir une information sur le potentiel d'adhérence maximum de la roue sur le sol. En effet, lorsque le pneu est soumis à une sollicitation, le point d'application des forces appliquées dans l'aire de contact dépend entre autre du coefficient d'adhérence maxi parce que, dès qu'une partie de l'aire de contact de la roue sur la chaussée est en glissement, sa contribution aux efforts tangentiels est saturée à un niveau qui dépend du coefficient d'adhérence. Les déformations du pneu sont elles mêmes sensibles au déplacement de ce point d'application. En particulier, ces déformations créent des contraintes dans le bourrelet. Ces contraintes, sensibles aux efforts appliqués, sont aussi sensibles au déplacement du point d'application des forces dans l'aire de contact.

La méthode proposée utilise des mesures des contraintes dans le ou les bourrelets en certains azimuts du pneu pour permettre une estimation du coefficient d'adhérence maxi.

Pour fournir une bonne estimation de $\mu$, la méthode nécessite qu'il existe une zone de glissement dans l'aire de contact, qu'elle soit créée par une conception spéciale du pneu ou par un niveau suffisant de sollicitation appliqué au pneu. De manière à obtenir une information fiable même en cas de faible glissement, l'invention propose d'estimer, en plus du potentiel d'adhérence maximal, le pourcentage de potentiel utilisé. Cette grandeur présente en effet l'avantage d'être plus facilement estimée en valeur absolue même pour des sollicitations faibles.

La méthode selon l'invention, pour la détermination du coefficient d'adhérence $\mu$ dans l'aire de contact d'un pneu sur une chaussée, comporte les étapes suivantes :

- sélectionner plusieurs points fixes dans l'espace (c'est à dire fixes dans le repère lié au véhicule), situés à des azimuts différents le long de la circonférence dans au moins un bourrelet du pneu,
- effectuer autant de mesures de variation de contrainte à ces points fixes lorsque le pneu roule sur la chaussée,
- traiter les signaux de mesure de façon à en extraire ledit coefficient d'adhérence $\mu$.

Avantageusement, ledit coefficient d'adhérence $\mu$ est déduit d'au moins 5 mesures de contraintes effectuées dans au moins un bourrelet du pneu, en 5 points fixes dans l'espace (c'est à dire fixes dans le repère lié au véhicule), situés à des azimuts différents le long de la circonférence.

La méthode de l'invention est basée sur la constatation du fait que les efforts agissant entre la bande de roulement du pneu et la chaussée provoquent une déformation des flancs des pneus qui sont la cause de l'apparition de contraintes sensibles et reproductibles dans le bourrelet. Ces contraintes, si l'on parvient à les mesurer isolément lors de la rotation du pneu en temps réel, peuvent permettre de connaître à chaque instant le sens et l'intensité des efforts agissant sur le pneu ainsi que le signe et l'intensité du couple d'auto-alignement exercé par le pneu et le coefficient d'adhérence du pneu sur la chaussée.

Sous un aspect particulier mais intéressant, l'invention propose d'estimer la contrainte de cisaillement dans la direction circonférentielle.

La suite de la description explique plus en détails l'invention à l'aide des figures jointes dans lesquelles :

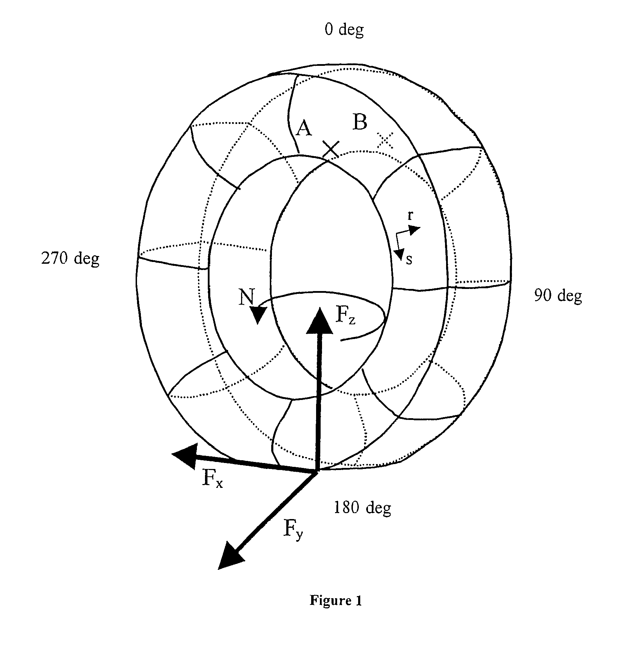

la figure 1 est une perspective d'un pneu sur lequel on définit des conventions utiles à la compréhension de l'invention ;

les figures 2a et 2b montrent l'effet de la composante verticale Fz sur la contrainte $\sigma_{rs}$ :

- où la courbe en trait plein correspond à une charge verticale de 400 daN,
- où la courbe en pointillés correspond à une charge verticale de 500 daN,
- où la courbe en trait mixte correspond à une charge verticale de 300 daN ;

les figures 3a et 3b montrent l'effet de la composante Fx sur la contrainte $\sigma_{rs}$:

- où la courbe en trait plein correspond à une charge verticale de 400 daN et une absence de force Fx,
- où la courbe en pointillés correspond à une charge verticale de 400 daN et une force Fx de -400 daN (Freineur),
- où la courbe en trait mixte correspond à une charge verticale de 400 daN et une force Fx de 400 daN (Moteur) ;

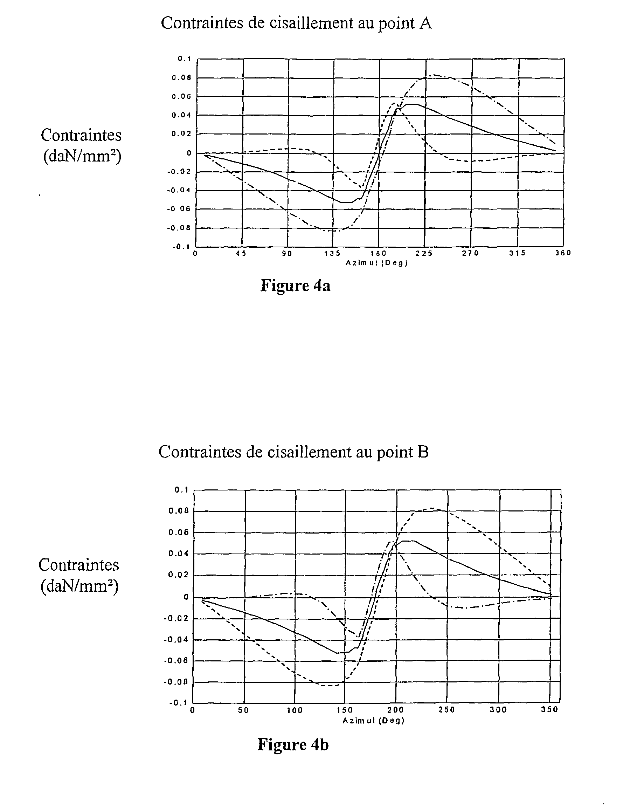

les figures 4a et 4b montrent l'effet de la composante Fy sur la contrainte $\sigma_{rs}$:

- où la courbe en trait plein correspond à une charge verticale de 400 daN sans effort Fy,
- où la courbe en pointillés correspond à une charge verticale de 400 daN avec un effort Fy de 280 daN,
- où la courbe en traits mixtes correspond à une charge verticale de 400 daN avec un effort Fy de -280 daN ;

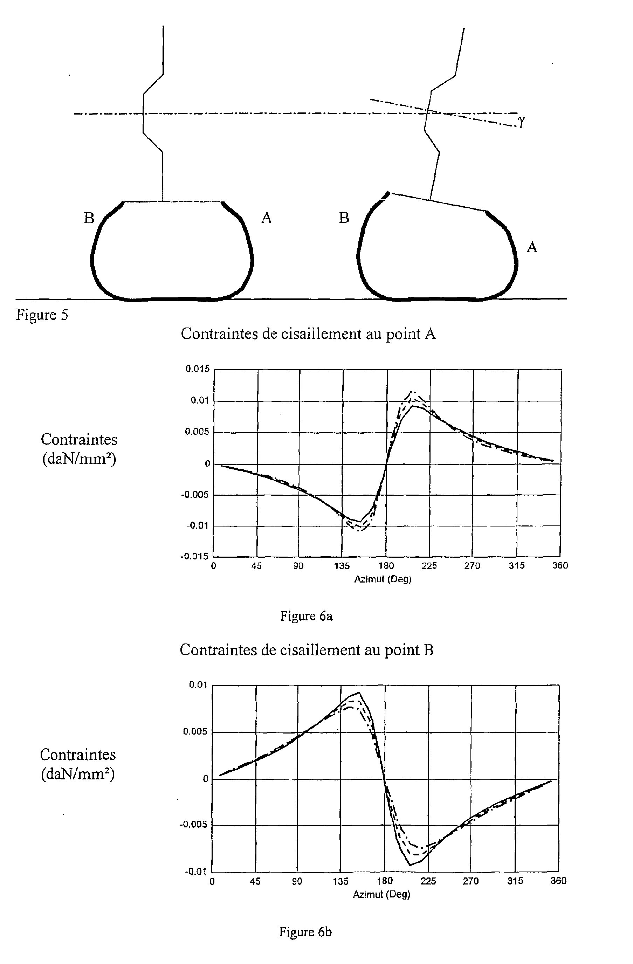

la figure 5 montre la déformation du pneumatique lorsqu'un angle de carrossage est appliqués ;

les figures 6a et 6b montrent l'effet du carrossage sur les signaux de contraintes de cisaillement :

- où la courbe en trait plein correspond à une charge verticale de 400 daN sans effort Fx et Fy et à angle de carrossage nul,
- où la courbe en pointillés correspond à une charge verticale de 400 daN avec un angle de carrossage de 2°,
- où la courbe en traits mixtes correspond à une charge verticale de 400 daN avec un angle de carrossage de 4° ;

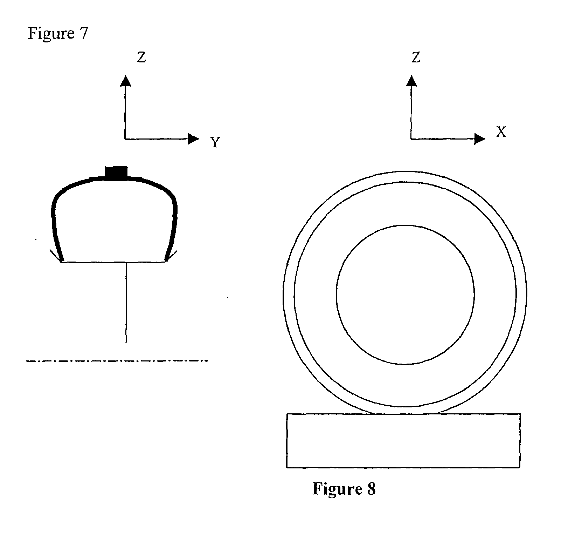

la figure 7 est une vue de face d'un pneu schématique permettant d'expliquer l'invention ;

la figure 8 est une vue de côté d'un pneu schématique permettant d'expliquer l'invention ;

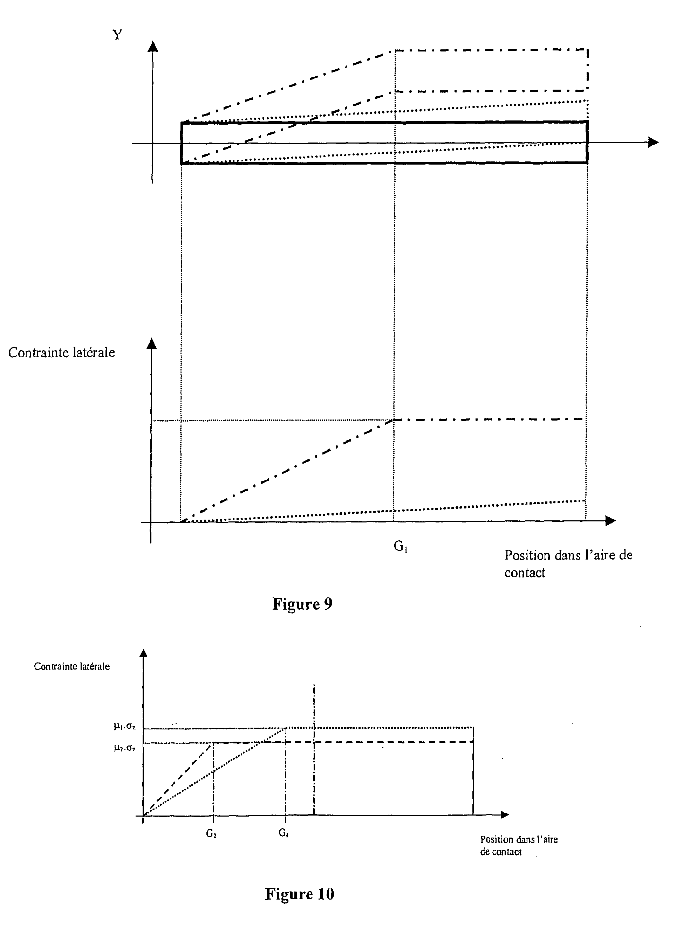

la figure 9 illustre le cisaillement d'une nervure dans l'aire de contact, ainsi que les contraintes associées ;

la figure 10 illustre l'effet du coefficient de frottement sur la répartition des efforts ;

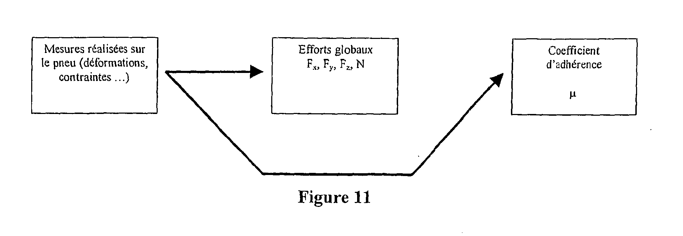

la figure 11 est un bloc diagramme de l'estimation de $\mu$ à partir des mesures de déformation ;

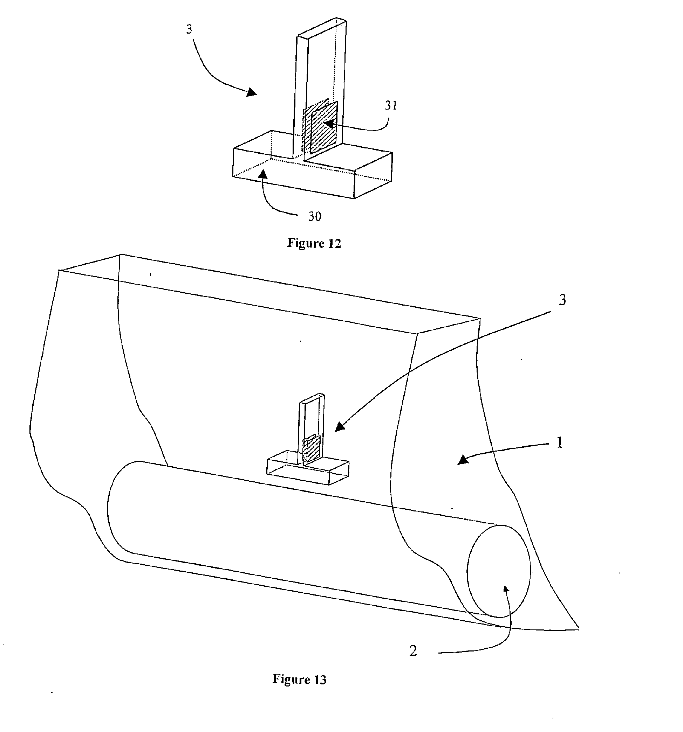

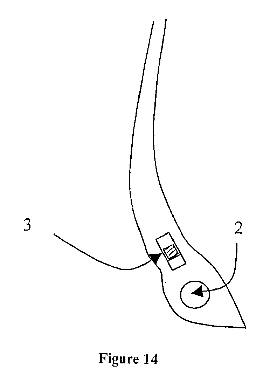

les figures 12, 13 et 14 illustrent un type de capteur utilisable pour mesurer les contraintes de cisaillement et son implantation proposée dans le bourrelet ;

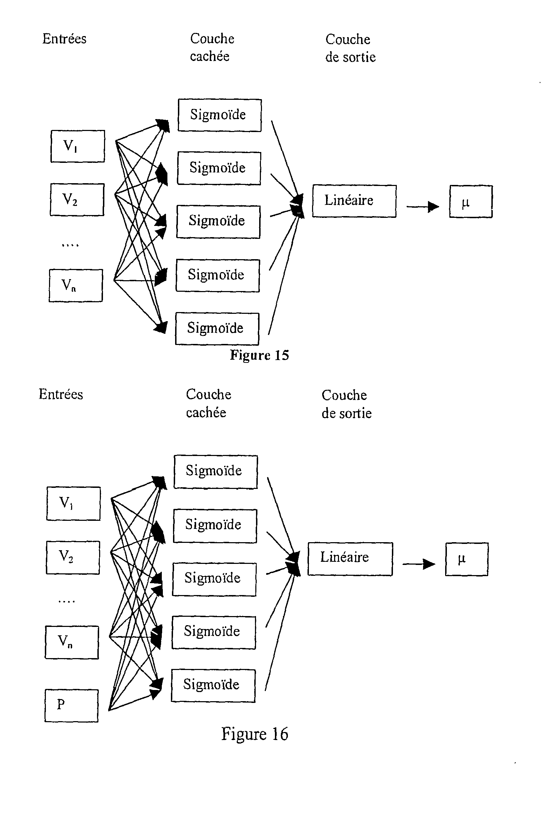

les figures 15 et 16 illustrent une architecture du type réseau de neurones utilisable pour estimer µ avec ou sans la pression en entrée;

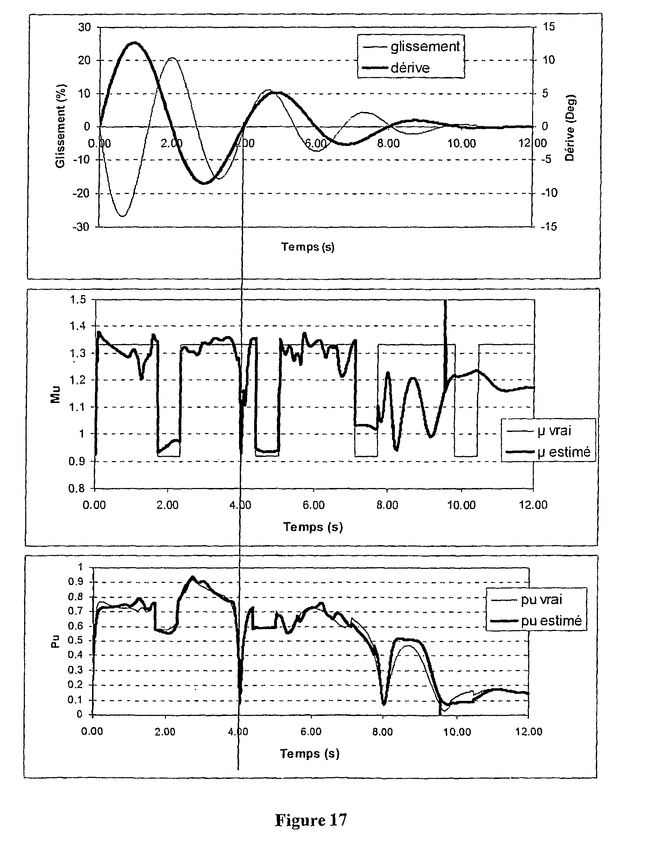

la figure 17 donne les résultats de l'estimation de µ et du pourcentage du potentiel d'adhérence utilisé.

La méthode décrite ici s'appuie sur le fait que chaque force appliquée au pneu dans l'aire de contact provoque une déformation des flancs du pneu qui se répercute dans le bourrelet sous forme d'une contrainte de cisaillement. Considérons le cas d'un pneu monté sur sa roue et gonflé dans le premier bourrelet duquel on mesure la contrainte de cisaillement dans la direction circonférentielle. En l'absence de forces appliquées sur le pneu, la contrainte mesurée est constante en fonction de l'angle de rotation de l'ensemble monté.

Lorsque le pneu est soumis à des forces, on observe les effets suivants pour chacune des composantes desdites forces :

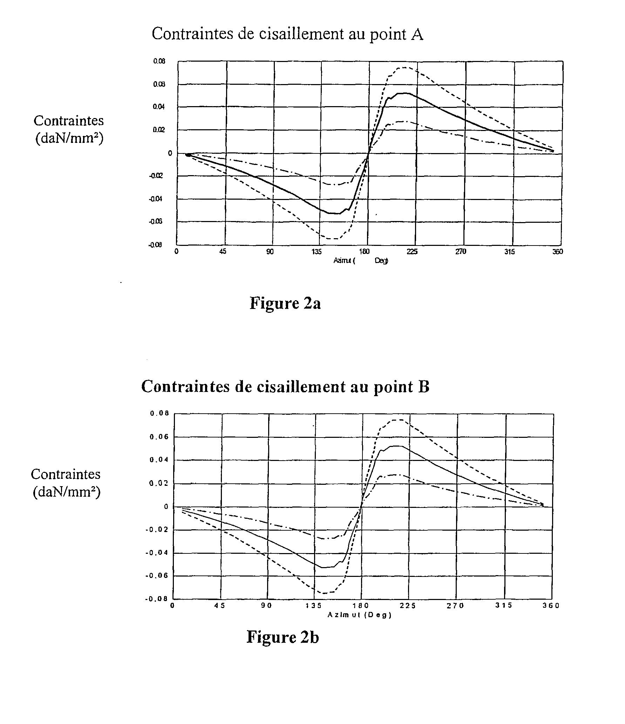

- La composante verticale (dénommée Fz) plaque le pneu sur le sol. En créant une aire de contact, elle entraîne un déplacement de la roue par rapport au centre de la ceinture du pneu. Il en résulte une déradialisation qui se traduit par une variation des contraintes de cisaillement dans le bourrelet. Celui-ci est cisaillé dans un sens avant l'aire de contact et dans l'autre sens après l'aire de contact comme l'indiquent les figures 2a et 2b.

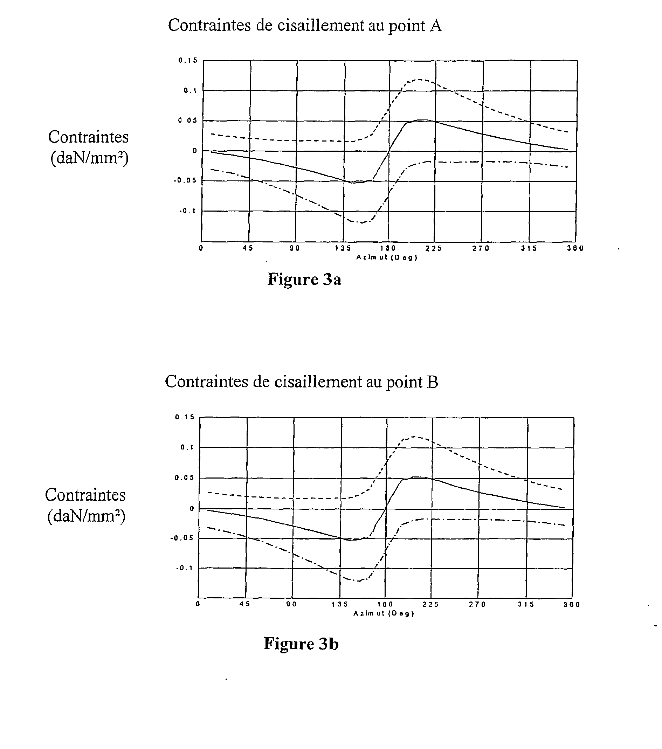

- La composante horizontale dans la direction de roulage (dénommée Fx) provoque une légère rotation de la roue par rapport à la ceinture du pneumatique. Il en résulte un cisaillement quasi uniforme en azimut dans un sens ou dans l'autre. Le sens du cisaillement ajouté indique la nature moteur ou freineur de l'effort appliqué. Les figures 3a et 3b montrent l'effet de la composante Fx.

- La composante horizontale dans la direction transverse (dénommée Fy) provoque principalement une différenciation des deux bourrelets. Dans le cas d'une sollicitation par Fy, l'un des flancs est principalement mis en extension. La déradialisation évolue et il en résulte une répartition différente des cisaillements dans le bourrelet. L'autre flanc est mis en contraction et l'effet inverse a lieu dans le bourrelet comme le mettent en évidence les figures 4a et 4b.

Le couple d'auto-alignement N (moment autour de l'axe vertical) n'est pas à proprement parler un autre effort agissant entre la bande de roulement du pneu et la chaussée. Il s'agit plutôt d'une conséquence de la façon dont les composantes Fx, Fy et Fz sont appliquées dans l'aire de contact. Si le point d'application de la résultante ayant pour composantes Fx, Fy et Fz n'est pas le centre de l'aire de contact, cette résultante génère un moment autour de Oz que l'on appelle couple d'auto-alignement. La présence de ce moment se traduit principalement par une rotation de l'aire de contact autour de Oz. Cet effet a pour conséquence d'induire un cisaillement dans un sens sur le premier flanc et dans l'autre sens sur le second flanc, à proximité de l'aire de contact.

Lorsque qu'une sollicitation qui mêle des composantes Fx, Fy et Fz est appliquée, on observe une superposition des effets énoncés précédemment sur la contrainte de cisaillement dans la direction circonférentielle. Un des avantages de la méthode proposée est de permettre une séparation des contributions de chaque composante de la sollicitation appliquée, de manière à permettre une estimation de chacune de ces composantes.

Dans le cas où un angle de carrossage est appliqué au pneumatique, les comportements des deux flancs et donc des deux bourrelets se distinguent. De manière imagée, tout se passe comme si un flanc porte plus de charge que l'autre. La figure 5 illustre ce fonctionnement en comparant une section de la partie du pneu dans l'aire de contact sans carrossage et avec carrossage γ. Il en résulte aussi un léger déplacement latéral de l'aire de contact qui se traduit par une poussée dans la direction Y. Les figures 6a et 6b montrent l'évolution de la contrainte de cisaillement circonférentielle dans les deux bourrelets. Sur le bourrelet surchargé (points A), l'évolution est semblable à celle d'une augmentation de la charge. Sur l'autre bourrelet (points B), on constate une évolution compatible avec une diminution de la charge portée. Cette évolution des signaux correspond à une rotation de l'aire de contact autour de l'axe Ox.

Définissons l'azimut θ comme l'angle auquel on analyse la contrainte de cisaillement dans le bourrelet. L'origine de l'azimut est prise à l'opposé du centre de l'aire de contact. Le centre de l'aire de contact a donc l'azimut 180°.

La rigidité apparente d'un pneumatique provient à la fois de son fonctionnement pneumatique (de sa pression de gonflage) et de sa rigidité structurelle (rigidité de son architecture). Les signaux de contrainte de cisaillement mesurés contiennent eux aussi une composante pneumatique et une composante structurelle. Par exemple, les signaux de cisaillement d'un pneu gonflé à 2 bars et chargé à 400 daN suivant Z ne sont pas identiques à ceux délivrés par le même pneu à 2.5 bars et chargé à 500 daN. Cette différence correspond à la contribution structurelle et peut permettre d'estimer la pression de gonflage du pneumatique.

Dans le cas où la pression de gonflage varie, les liens qui relient les efforts appliqués et les signaux de cisaillement sont quantitativement modifiés, mais sans que leur nature ne soit changée. Ainsi, la méthode peut être expliquée d'abord dans le cas d'une pression de gonflage supposée constante dans un but de simplicité. De même, nous considérons dans la suite que le carrossage est constant et nul pour rendre l'explication plus claire et ne mentionnons que les cas les plus intéressants vis à vis de ce paramètre.

L'invention repose sur la remarque suivante : Considérons un pneu simplifié muni d'une nervure unique continue. Les figures 7 et 8 représentent un tel pneu. Dans la zone de l'aire de contact, la nervure est soumise à une contrainte verticale qui la plaque contre le sol. On parle souvent de mise à plat, dans l'empreinte du pneu sur le sol. En l'absence de dérive du pneu, une droite formée par des points de repère pris sur la nervure de façon à ce qu'ils soient alignés dans l'empreinte de contact avec le sol sont ensuite, lors de la rotation du pneu, compris dans un plan qui contient ladite droite définie lorsque les points étaient dans l'empreinte de contact. Si l'on applique un angle de dérive au pneu en roulage, le plan contenant lesdits points de repère lorsqu'ils sont suffisamment éloignés de l'empreinte de contact au sol forme un angle égal à l'angle de dérive avec les points de repère lorsqu'ils sont alignés dans l'empreinte de contact avec le sol. Sur la figure 9, on peut observer en trait plein la nervure vu de dessus sans dérive et en pointillés la nervure avec une dérive imposée. Plus on s'enfonce dans l'aire de contact, plus la nervure est cisaillée et plus la contrainte latérale qui s'applique est grande. Si l'angle de dérive est suffisant, il existe dans l'aire de contact un point $G_1$ où le rapport de cette contrainte latérale sur la contrainte verticale devient supérieur au potentiel d'adhérence maximum $\mu_1$, la nervure se met à glisser. Cette situation est représentée en trait mixte sur la figure 9.

La force latérale $Fy_1$ générée par le pneu est égale à l'intégrale dans l'aire de contact de la contrainte latérale.

Si le pneu roule sur une surface où le potentiel d'adhérence maxi $\mu_2$ est plus faible que $\mu_1$, il est nécessaire d'augmenter l'angle de dérive pour que le pneu génère la même force de poussée Fy. La zone de glissement commence désormais au point $G_2$ plus proche de l'entrée de l'aire de contact. La figure 10 permet de comparer les deux situations.

Entre ces deux configurations, les efforts latéraux sont les mêmes (même aire sous la courbe) mais le point d'application de la force Fy s'est déplacé. Plus le potentiel d'adhérence maxi diminue, c'est à dire plus le coefficient d'adhérence diminue, plus le point d'application de la force latérale se déplace vers l'entrée de l'aire de contact.

Une conséquence est que pour le même effort latéral Fy, le couple d'auto-alignement N a une valeur différente. Entre les deux situations, les effets sur les contraintes associés à Fy sont identiques mais ceux liées à N diffèrent en raison d'un déplacement du point d'application de la force. On va exploiter ces différences de contraintes dans le bourrelet pour estimer le coefficient d'adhérence maxi.

On vient d'établir un lien entre les contraintes dans le bourrelet du pneu d'une part, les efforts globaux appliqués au pneu d'autre part et le coefficient d'adhérence maxi. Toutefois, pour disposer d'autant d'informations que possible pour estimer le coefficient d'adhérence sur l'ensemble du domaine de sollicitation, on estime $\mu$ directement à partir des mesures de contraintes réalisées dans les bourrelets du pneu, sans passer par une estimation des efforts à partir desquels on rechercherait ensuite à estimer $\mu$ (figure 11).

En particulier, il est possible d'utiliser la mesure de la contrainte de cisaillement circonférentiel dans le bourrelet pour estimer le potentiel d'adhérence maxi.

La mesure de la contrainte de cisaillement dans le bourrelet 1 d'un côté ou des deux côtés du pneumatique peut se faire de n'importe quelle manière, par un dispositif externe ou un dispositif interne au pneu. A titre d'exemple, on décrit ici pour réaliser la mesure de la contrainte de cisaillement circonférentiel dans le bourrelet 1 l'utilisation d'un ou de capteurs 3 placés dans le pneu dans une zone 2 d'ancrage de la carcasse, et sont donc entraînés en rotation par le pneu.

Ce ou ces capteurs 3 intégrés au pneu et mesurant localement la contrainte de cisaillement circonférentiel du ou des bourrelets peuvent faire appel à n'importe quel principe physique de mesure. Il peut par exemple s'agir d'un corps d'épreuve 30 équipé de jauges de contraintes 31, par exemple résistives. Une déformation du corps d'épreuve se traduit par une modification de la résistance des jauges de contraintes 31 collées à sa surface (figures 12, 13 et 14). Les deux jauges 31 placées de part et d'autre du corps d'épreuve 30 fournissent alors par l'intermédiaire d'un pont de Wheatstone un signal fortement lié à la contrainte de cisaillement. S'il est actif, le capteur 3 peut être alimenté soit par le véhicule par téléalimentation soit par une batterie embarquée sur la roue ou dans le pneu ou par tout autre moyen. Tout est aussi possible en ce qui concerne la transmission de l'information vers le véhicule, par voie radio ou autre. Le capteur 3 en lui même doit pouvoir fournir une information en continu ou avec une fréquence de rafraîchissement suffisamment rapide par rapport à la période de rotation de la roue.

Cette approche utilisant un capteur 3 intégré au pneu a l'avantage de permettre une connaissance de la contrainte de cisaillement dans le bourrelet d'un côté ou des deux côtés, à tous les azimuts du pneumatique puisque un capteur 3, entraîné par le pneu, explore l'ensemble des azimuts lors d'une rotation de la roue.

Une alternative pour augmenter la précision ou la robustesse de la méthode consiste à utiliser une mesure multi-dimensionnelle à la place d'une mesure mono-dimensionnelle. Par exemple et de manière non limitative, on peut utiliser à la fois une contrainte de cisaillement circonférentiel et une contrainte de cisaillement transversal, les deux grandeurs étant mesurées de manière préférée mais non limitative simultanément par le même capteur bi-dimensionnel au même endroit.

L'utilisation de ces deux contraintes permet de rendre une configuration dans laquelle un seul bourrelet est équipé de capteur(s) aussi robuste sur le plan de la performance et précise qu'une configuration dans laquelle les deux bourrelets sont équipés.

Dans ce cas, les entrées de la fonction de transfert sont constituées d'un panachage de mesures de l'une ou l'autre ou des différents types de contraintes à différents azimuts. Hormis cette différence, on utilise exactement la même démarche de détermination de la fonction de transfert. Cette approche peut s'avérer très intéressante car sur le plan de la réalisation du produit final, il peut être beaucoup plus simple et moins coûteux de n'équiper qu'un seul bourrelet même si le capteur est lui-même plus cher à fabriquer.

De manière à capturer convenablement les évolutions de la contrainte de cisaillement circonférentiel, les mesures doivent être réalisées en des azimuts bien choisis. En particulier et à titre d'exemple non limitatif, on peut indiquer les cas suivants :

■ Mesure en trois azimuts sur les deux flancs. Un azimut choisi en entrée d'aire de contact (par exemple entre 100° et 150° d'azimut), une mesure à 180° (centre de l'aire de contact) et une mesure en sortie d'aire de contact à l'azimut symétrique de celui utilisé en entrée. Ceci donne un total de six valeurs de contraintes de cisaillement à partir desquelles il est possible d'estimer le coefficient d'adhérence maxi.

■ Mesure en sept azimuts sur un unique flanc. Les trois premiers sont situés en entrée d'aire de contact, le quatrième à 180° au centre de l'aire de contact et les trois derniers symétriques des trois premiers par rapport au centre de l'aire de contact.

Pour établir la fonction de transfert entre les mesures de contraintes de cisaillement en plusieurs azimuts et le coefficient d'adhérence maxi, on peut par exemple utiliser un réseau de neurones, du type perceptron à une couche cachée, utilisé en tant qu'approximateur. La figure 15 schématise ce type de réseau de neurones. Toute autre fonction mathématique permettant ce type d'approximation est bien sur utilisable.

De nombreux systèmes de mesure de la pression des pneumatiques sont désormais disponibles et rendent possible la mesure de celle-ci en cours de roulage. Si un tel système est disponible, la pression peut être utilisée comme entrée supplémentaire de la fonction de transfert comme indiqué par la figure 16. Bien sur, d'autres grandeurs peuvent être introduites en entrée de la fonction de transfert de manière à en améliorer les performances (par exemple et sans limitation, le carrossage, la vitesse du véhicule...).

Dans le cas où l'on utilise un réseau de neurones pour réaliser la fonction de transfert. La démarche suivie pour construire la fonction est la suivante :

La première étape consiste à réaliser une base de données contenant les valeurs des contraintes de cisaillement aux azimuts choisis (ou toute valeur représentative) qui représenteront les entrées de la fonction de transfert, et contenant les valeurs de $\mu$. Il est possible de construire une telle base de données soit à l'aide d'une machine de mesure (l'avantage est de pouvoir solliciter le pneu par des forces Fx, Fy, Fz indépendantes et de faire varier le coefficient d'adhérence de manière bien contrôlée) soit sur véhicule en utilisant par exemple une roue dynamométrique (pour mesurer les efforts) et en roulant sur différents sols.

Dans le cas où l'utilisation future du système doit se faire dans des conditions de carrossage et/ou de pression variable, il est indispensable que la base de données utilisée à cette étape contienne des angles de carrossage et des pressions représentatives des conditions d'utilisation futures.

Dans un second temps, on recherche une fonction de transfert à l'aide de cette base de données, $\mu$ étant la sortie de la fonction de transfert. Dans le cas où on utilise un réseau de neurones, c'est la phase d'apprentissage.

La troisième étape consiste à vérifier que la fonction de transfert obtenue fonctionne correctement dans tout le domaine désiré, c'est à dire à vérifier qu'elle est généralisable.

Dans tous les cas, la méthode proposée pour estimer le coefficient d'adhérence maxi nécessite de solliciter le pneu par des efforts Fx, Fy ou les deux combinés. En effet, il est absolument nécessaire qu'il existe une zone de glissement dans l'aire de contact pour que la démarche présentée s'applique. Grâce à cette méthode, on est certain d'avoir une estimation de la limite d'adhérence avant de l'atteindre. Toutefois, lorsque le pneu est très peu sollicité, l'estimation est imprécise ou fausse (absence de glissement de l'aire de contact). Pour cette raison, il est proposé de s'intéresser au pourcentage de potentiel d'adhérence utilisé défini de la façon suivante :

$$p_u = \frac{\mu_{utilisé}}{\mu} = \frac{\sqrt{F_x^2 + F_y^2}}{\mu . F_z}$$

L'approche proposée ici consiste à déterminer directement le pourcentage pu à partir des mesures de contraintes de cisaillement. Comme pour la détermination de µ, on peut procéder de la façon expliquée dans les paragraphes suivants.

La première étape consiste à réaliser une base de données contenant les valeurs des contraintes de cisaillement aux azimuts choisis (ou toute valeur représentative) qui représenteront les entrées de la fonction de transfert, et contenant $p_u$ (sortie de la fonction de transfert) pour un ensemble de sollicitations. Il est possible de construire une telle base de données soit à l'aide d'une machine de mesure (l'avantage est de pouvoir solliciter le pneu par des forces Fx, Fy, Fz indépendantes et de faire varier le coefficient d'adhérence) soit sur véhicule en utilisant par exemple une roue dynamométrique (pour mesurer les efforts) et en roulant sur différents sols.

Dans un second temps, on recherche une fonction de transfert à l'aide de cette base de données, pu étant la sortie de la fonction de transfert. Dans le cas où on utilise un réseau de neurones, c'est la phase d'apprentissage.

La troisième étape consiste à vérifier que la fonction de transfert obtenue fonctionne correctement dans tout le domaine désiré, c'est à dire à vérifier qu'elle est généralisable.

Le pourcentage proposé présente l'intérêt d'être plus facilement correctement estimé en grandeur absolue quelle que soit la sollicitation, même faible, appliquée au pneu. On l'obtient de manière directe par exemple par un réseau de neurones en appliquant la démarche présentée pour l'estimation de µ. La figure 17 présente un exemple de reconstruction du potentiel d'adhérence maxi et du pourcentage de potentiel utilisé. Le couple moteur ou freineur (glissement lié à Fx) et la force transversale (dérive liée à Fy) varient au cours du temps ainsi que le sol sur lequel roule le véhicule. La charge Fz est imposée. Lorsque la sollicitation du pneu est faible (Fx et Fy faibles simultanément) au voisinage de 4 s, la qualité de l'estimation du potentiel d'adhérence maxi chute. L'estimation du pourcentage de potentiel utilisé reste quant à elle tout à fait correcte.

Dans le cadre d'une utilisation par un système embarqué dans un véhicule (système de type ESP ou ABS), il est intéressant de disposer d'une grandeur définie sur tout le domaine d'utilisation. Il est par exemple envisageable d'utiliser le pourcentage de potentiel d'adhérence utilisé (pu) pour affiner les mécanismes de régulation des systèmes ABS ou ESP.

**Revendications**

1. Méthode de détermination du coefficient d'adhérence µ dans l'aire de contact d'un pneu sur une chaussée, dans laquelle on sélectionne plusieurs points fixes dans l'espace, situés à des azimuts différents le long de la circonférence dans au moins un bourrelet du pneu, on effectue autant de mesures de variation de contrainte à ces points fixes lorsque le pneu roule sur la chaussée et l'on traite les signaux de mesure de façon à en extraire ledit coefficient d'adhérence µ.

2. Méthode selon la revendication 1, **caractérisée en ce que** ledit coefficient d'adhérence µ est déduit d'au moins 5 mesures de variation de contrainte de cisaillement effectuées dans au moins un bourrelet du pneu, en 5 points fixes dans l'espace, situés à des azimuts différents le long de la circonférence.

3. Méthode selon la revendication 1 ou 2, **caractérisée en ce que** la mesure de la contrainte de cisaillement est effectuée par au moins un capteur intégré dans un bourrelet du pneu, le signal délivré par ledit capteur étant traité pour relever sa valeur en plusieurs azimuts correspondant auxdits points fixes.

4. Méthode selon la revendication 1 ou 2, **caractérisée en ce que** la mesure de la contrainte de cisaillement est effectuée par autant de capteurs que d'azimuts à observer, les capteurs étant externes au pneu et disposés dans l'espace fixe.

5. Méthode selon l'une des revendications 1 à 4, **caractérisée en ce que** l'on effectue une mesure en trois azimuts sur chacun des deux flancs, à un azimut choisi en entrée d'aire de contact, à 180° et à un azimut choisi en sortie d'aire de contact, azimut symétrique de celui utilisé en entrée.

6. Méthode selon l'une des revendications 1 à 5, **caractérisée en ce** l'on effectue une mesure en sept azimuts sur un seul flanc, les trois premiers azimuts étant situés en entrée d'aire de contact, le quatrième à 180° au centre de l'aire de contact et les trois derniers symétriques des trois premiers par rapport au centre de l'aire de contact.

7. Méthode selon l'une des revendications 1 à 6, **caractérisée en ce que** l'on établit une fonction de transfert entre les mesures et le coefficient d'adhérence maxi par les étapes suivantes :

• réaliser une base de données contenant les valeurs des contraintes de cisaillement aux azimuts choisis, et les valeurs de $\mu$ associées, l'ensemble des valeurs étant relevées expérimentalement.

• rechercher une fonction de transfert à l'aide de cette base de données, $\mu$ étant la sortie de la fonction de transfert.

**8.** Méthode selon la revendication 7, utilisant un réseau de neurones du type perceptron à une couche cachée, utilisé en tant qu'approximateur.

**9.** Méthode selon l'une des revendications 1 à 8, **caractérisée en ce que** l'on estime la contrainte de cisaillement par la mesure de la flexion d'un corps d'épreuve inséré dans le bourrelet.

**10.** Méthode selon l'une des revendications 1 à 8, **caractérisée en ce que** l'on estime la contrainte de cisaillement par la mesure de la flexion d'un corps d'épreuve à l'aide de jauges de déformation.

**11.** Méthode selon l'une des revendications 1 à 10, **caractérisée en ce que** l'on détermine le pourcentage de potentiel d'adhérence utilisé défini par $\quad p_u = \dfrac{\mu_{utilisé}}{\mu} = \dfrac{\sqrt{F_x^2 + F_y^2}}{\mu.F_z}$

en procédant de la façon suivante :

• réaliser une base de données contenant les valeurs des contraintes de cisaillement aux azimuts choisis, pour un ensemble de sollicitations du pneu,

• rechercher une fonction de transfert à l'aide de cette base de données, $p_u$ étant la sortie de la fonction de transfert, les valeurs des contraintes de cisaillement étant les entrées de la fonction de transfert,

• vérifier que la fonction de transfert obtenue fonctionne correctement dans tout le domaine de sollicitations désiré.

**Claims**

**1.** Method of determining the grip coefficient $\mu$ in the contact area of a tyre on a road, in which a plurality of fixed points in space are selected, which lie at different azimuths along the circumference in at least one bead of the tyre, a corresponding number of measurements of stress variation are carried out at these fixed points when the tyre is rolling on the road and the measurement signals are processed so as to extract the said grip coefficient $\mu$ from them.

**2.** Method according to Claim 1, **characterised in that** the said grip coefficient $\mu$ is derived from at least 5 measurements of shear stress variation carried out in at least one bead of the tyre, at 5 fixed points in space which lie at different azimuths along the circumference.

**3.** Method according to Claim 1 or 2, **characterised in that** the measurement of the shear stress is carried out by at least one sensor integrated in a bead of the tyre, the signal delivered by the said sensor being processed in order to acquire its value at a plurality of azimuths corresponding to the said fixed points.

**4.** Method according to Claim 1 or 2, **characterised in that** the measurement of the shear stress is carried out by as many sensors as there are azimuths to be observed, the sensors being external to the tyre and arranged in fixed space.

**5.** Method according to one of Claims 1 to 4, **characterised in that** a measurement is carried out at three azimuths on each of the two sidewalls, at an azimuth selected at the entry of the contact area, at 180° and at an azimuth selected at the exit of the contact area, the latter azimuth being symmetrical to the one used at the entry.

**6.** Method according to one of Claims 1 to 5, **characterised in that** a measurement is carried out at seven azimuths on a single sidewall, the first three azimuths lying at the entry of the contact area, the fourth at 180° at the centre of the contact area and the last three being symmetrical to the first three with respect to the centre of the contact area.

**7.** Method according to one of Claims 1 to 6, **characterised in that** a transfer function is established between the measurements and the maximum grip coefficient by the following steps:

• compiling a data base containing the values of the shear stresses at the selected azimuths, and the associated values of $\mu$, all the values being acquired experimentally.
• finding a transfer function with the aid of this data base, $\mu$ being the output of the transfer function.

8. Method according to Claim 7, using a neural network of the perceptron type with a hidden layer used as an approximator.

9. Method according to one of Claims 1 to 8, **characterised in that** the shear stress is estimated by measuring the flexure of a test body inserted into the bead.

10. Method according to one of Claims 1 to 8, **characterised in that** the shear stress is estimated by measuring the flexure of a test body with the aid of strain gauges.

11. Method according to one of Claims 1 to 10, **characterised in that** the percentage grip potential used, defined by

$$p_u = \frac{\mu_{used}}{\mu} = \frac{\sqrt{F_x^2 + F_y^2}}{\mu.F_z} \; , \; \text{is determined by adopting the following procedure:}$$

• compiling a data base containing the values of the shear stresses at the selected azimuths, for a set of constraints of the tyre,
• seeking a transfer function with the aid of this data base, $p_u$ being the output of the transfer function, the values of the shear stresses being the inputs of the transfer function,
• checking that the transfer function which is obtained works correctly throughout the desired range of constraints.

**Patentansprüche**

1. Verfahren zum Bestimmen des Haftkoeffizienten $\mu$ auf der Aufstandsfläche eines Reifens auf einer Fahrbahn, wobei mehrere feste Punkte im Raum ausgewählt werden, die sich an verschiedenen Azimutwinkeln längs des Umfangs wenigstens in einem Wulst des Reifens befinden, ebensoviele Messungen der Beanspruchungsveränderung an diesen festen Punkten ausgeführt werden, wenn der Reifen auf der Fahrbahn rollt, und die Messsignale verarbeitet werden, um den Haftkoeffizient $\mu$ daraus zu extrahieren.

2. Verfahren nach Anspruch 1, **dadurch gekennzeichnet, dass** der Haftkoeffizient $\mu$ aus wenigstens 5 Messungen der Scherbeanspruchungsveränderung abgeleitet wird, die wenigstens in einem Wulst des Reifens an 5 festen Punkten im Raum ausgeführt werden, die sich an verschiedenen Azimutwinkeln längs des Umfangs befinden.

3. Verfahren nach Anspruch 1 oder 2, **dadurch gekennzeichnet, dass** die Messung der Scherbeanspruchung durch wenigstens einen in einen Wulst des Reifens integrierten Sensor ausgeführt wird, wobei das von diesem Sensor gelieferte Signal verarbeitet wird, um seinen Wert an verschiedenen Azimutwinkeln, die diesen festen Punkten entsprechen, zu entnehmen.

4. Verfahren nach Anspruch 1 oder 2, **dadurch gekennzeichnet, dass** die Messung der Scherbeanspruchung durch ebenso viele Sensoren ausgeführt wird, wie Azimutwinkel beobachtet werden sollen, wobei sich die Sensoren außerhalb des Reifens befinden und im festen Raum angeordnet sind.

5. Verfahren nach einem der Ansprüche 1 bis 4, **dadurch gekennzeichnet, dass** eine Messung an drei Azimutwinkeln auf jeder der beiden Flanken, bei einem Azimutwinkel, der am Anfang der Aufstandsfläche gewählt ist, bei 180° und bei einem Azimutwinkel, der am Austritt der Aufstandsfläche gewählt ist und ein Azimutwinkel ist, der zu jenem, der am Anfang verwendet wird, symmetrisch ist, ausgeführt wird.

6. Verfahren nach einem der Ansprüche 1 bis 5, **dadurch gekennzeichnet, dass** eine Messung an sieben Azimutwinkeln auf einer einzigen Flanke ausgeführt wird, wobei sich die drei ersten Azimutwinkel am Anfang der Aufstandsfläche befinden, der Vierte sich bei 180° im Zentrum der Aufstandsfläche befindet und die drei Letzteren zu den drei Ersteren in Bezug auf das Zentrum der Aufstandsfläche symmetrisch sind.

7. Verfahren nach einem der Ansprüche 1 bis 6, **dadurch gekennzeichnet, dass** eine Übertragungsfunktion zwischen den Messungen und dem maximalen Haftkoeffizienten durch die folgenden Schritte gebildet wird:

- Erzeugen einer Datenbank, die die Scherbeanspruchungswerte an den gewählten Azimutwinkeln und die zugeordneten Werte von $\mu$ enthält, wobei die Gesamtheit der Werte experimentell gewonnen wird,
- Suchen einer Übertragungsfunktion mit Hilfe dieser Datenbank, wobei $\mu$ der Ausgang der Übertragungsfunktion ist.

8. Verfahren nach Anspruch 7, die ein neuronales Netz des Perzeptron-Typs mit verborgener Schicht, das als eine Approximierungseinrichtung verwendet wird, verwendet.

9. Verfahren nach einem der Ansprüche 1 bis 8, **dadurch gekennzeichnet, dass** die Scherbeanspruchung durch die Messung der Biegung eines in den Wulst eingesetzten Prüfkörpers geschätzt wird.

10. Verfahren nach einem der Ansprüche 1 bis 8, **dadurch gekennzeichnet, dass** die Scherbeanspruchung durch die Messung der Biegung eines Prüfkörpers mit Hilfe von Verformungslehren geschätzt wird.

11. Verfahren nach einem der Ansprüche 1 bis 10, **dadurch gekennzeichnet, dass** der verwendete Haftpotential-Prozentsatz, der definiert ist durch

$$p_u \;=\; \frac{\mu_{verwendet}}{\mu} \;=\; \frac{\sqrt{F_x^2 \,+\, F_y^2}}{\mu F_z}$$

auf die folgende Weise bestimmt wird:

- Erzeugen einer Datenbank, die die Werte der Scherbeanspruchungen an den gewählten Azimutwinkeln enthält, für eine Gesamtheit von Belastungen des Reifens,
- Suchen einer Übertragungsfunktion mit Hilfe dieser Datenbank, wobei $p_u$ der Ausgang der Übertragungsfunktion ist und die Scherbeanspruchungswerte die Eingänge der Übertragungsfunktion sind,
- Verifizieren, dass die erhaltene Übertragungsfunktion im gesamten gewünschten Bereich von Belastungen korrekt arbeitet.

Figure 1

Contraintes de cisaillement au point A

Contraintes
(daN/mm²)

**Figure 2a**

Contraintes de cisaillement au point B

Contraintes
(daN/mm²)

**Figure 2b**

Contraintes de cisaillement au point A

Contraintes
(daN/mm²)

**Figure 3a**

Contraintes de cisaillement au point B

Contraintes
(daN/mm²)

**Figure 3b**

Contraintes de cisaillement au point A

Contraintes
(daN/mm²)

**Figure 4a**

Contraintes de cisaillement au point B

Contraintes
(daN/mm²)

**Figure 4b**

Figure 5

Contraintes de cisaillement au point A

Contraintes
(daN/mm²)

Azimut (Deg)

Figure 6a

Contraintes de cisaillement au point B

Contraintes
(daN/mm²)

Azimut (Deg)

Figure 6b

Figure 7

Figure 8

Y

Contrainte latérale

$G_1$

Position dans l'aire de contact

**Figure 9**

Contrainte latérale

$\mu_1.\sigma_z$

$\mu_2.\sigma_z$

$G_2$     $G_1$

Position dans l'aire de contact

**Figure 10**

Mesures réalisées sur
le pneu (déformations,
contraintes ...)

Efforts globaux
$F_x$, $F_y$, $F_z$, N

Coefficient
d'adhérence

$\mu$

**Figure 11**

3

31

30

**Figure 12**

3

1

2

**Figure 13**

Figure 14

Entrées          Couche          Couche
                 cachée          de sortie

Figure 15

Entrées          Couche          Couche
                 cachée          de sortie

Figure 16

**Figure 17**

**EP 1 517 822 B1**

**RÉFÉRENCES CITÉES DANS LA DESCRIPTION**

**Documents brevets cités dans la description**

- WO 0136241 A
- US 5964265 A
- US 5864056 A